# EUROPEAN PATENT APPLICATION

(11) **EP 4 036 585 A1**
(43) Date of publication of application: **03.08.2022**
(21) Application number: 19946736.6
(22) Date of filing: 24.09.2019
(51) Int. Cl.: G01N 35/00

(54) **SCHEDULING SYSTEM AND METHOD, SCHEDULING CONTROL SYSTEM, BIOCHEMICAL ANALYSIS SYSTEM AND DEVICE, AND STORAGE MEDIUM**

(71) Applicant: MGI Tech Co., Ltd., Shenzhen, Guangdong 518083 (CN)
(72) Inventor: CHEN, Zehua, Shenzhen, Guangdong 518083 (CN); SUN, Leilin, Shenzhen, Guangdong 518083 (CN); HUANG, Liping, Shenzhen, Guangdong 518083 (CN); YU, Li, Shenzhen, Guangdong 518083 (CN); LIU, Zhuo, Shenzhen, Guangdong 518083 (CN); LI, Junyang, Shenzhen, Guangdong 518083 (CN); XING, Chutian, Shenzhen, Guangdong 518083 (CN); WANG, Zhonghai, Shenzhen, Guangdong 518083 (CN); CUI, Xingye, Shenzhen, Guangdong 518083 (CN); ZHENG, Ruhai, Shenzhen, Guangdong 518083 (CN)
(74) Representative: Zaboliene, Reda
(86) International application number: PCT/CN2019/107590
(87) International publication number: WO 2021/056206

(57) **Abstract**

A scheduling system includes a receiving system and a transfer system. The receiving system receives a carrier carrying a biological sample. The transfer system transfers the sample carrier between biochemical reaction platform and detection platform, so that a sample in the sample carrier performs a biochemical reaction on the biochemical reaction platform, and a signal from the reacted sample can be detected on the detection platform. The present disclosure further provides a scheduling method, a scheduling control system, a biochemical analysis system and device, and a computer-readable storage medium. The present disclosure improves a degree of automation of sample carrier scheduling, and realizes simultaneous analysis of multiple sample carriers to improve a testing throughput.

## Description

### FIELD

The subject matter relates to field of biochemical reaction, and more particularly, to a scheduling system and method, a scheduling control system, a biochemical analysis system and device, and a storage medium.

### BACKGROUND

In a field of biochemical analysis such as gene sequencing, a sequencing chip, which functions as a sample carrier for carrying samples, needs to be manually transferred to a sequencer, lowering a sequencing speed. Moreover, the existing sequencer mainly includes a detection platform and a biochemical reaction platform corresponding to the detection platform, which cannot realize simultaneous sequencing of multiple chips and switching among multiple chips. Thus, the sequencing throughput is limited.

### SUMMARY

In order to overcome some or all of the above problems and other potential problems, a scheduling system, a scheduling control system, a scheduling method, a biochemical analysis system, a biochemical analysis device, and a computer-readable storage medium are needed.

In a first aspect, a scheduling system is provided. The scheduling system includes a receiving system and a transfer system. The receiving system is configured to receive a sample carrier. The transfer system is configured to transfer the sample carrier between a biochemical reaction platform and a detection platform, so that a sample in the sample carrier can complete a biochemical reaction on the biochemical reaction platform, and a signal from the reacted sample can be detected on the detection platform.

In a second aspect, a scheduling control system is provided. The scheduling control system is configured to control the above scheduling system. The scheduling control system is connected to a sensing device, a triggering device, a biochemical reaction control system configured for controlling a biochemical reaction, a detection control system configured for controlling a detection, and the scheduling system. Through receiving signals from the sensing device, the triggering device, the biochemical reaction control system, and the detection control system, the scheduling system is controlled to schedule the sample carrier among different sites.

In a third aspect, a scheduling method is provided, which includes steps of a. receiving a sample carrier and transferring the sample carrier to a biochemical reaction platform, so that a sample carried by the sample carrier can perform a biochemical reaction on the biochemical reaction platform; b. transferring the sample carrier to a detection platform, so that a signal from the reacted sample can be detected on the detection platform, thereby obtaining biological characteristics of the sample.

In a fourth aspect, a scheduling method is provided, which includes steps of a. receiving an indication signal indicating that a sample carrier has been disposed in a scheduling system, and controlling the scheduling system to transfer the sample carrier to a biochemical reaction platform, so that a sample carried by the sample carrier can perform a biochemical reaction on the biochemical reaction platform; b. receiving a signal indicating that the sample in the sample carrier has completed the biochemical reaction, and controlling the scheduling system to transfer the sample carrier to the detection platform, so that a signal from the reacted sample can be detected on the detection platform, thereby obtaining biological characteristics of the sample.

In a fifth aspect, a biochemical analysis system is provided, which includes the above scheduling and scheduling control system, or uses the above scheduling method to schedule the sample carrier.

In a sixth aspect, a biochemical analysis device is provided, which includes the above scheduling and scheduling control system, the above biochemical analysis system, or uses the above scheduling method to schedule the sample carrier.

In a seventh aspect, a computer-readable storage medium is provided, which stores a computer program. The computer program is executed by a processing device to perform the above scheduling method.

The scheduling system, the scheduling control system, the scheduling method, the biochemical analysis system, the biochemical analysis device, and the computer-readable storage medium provided by the present disclosure improve automated sample processing of the sample carrier scheduling, realize simultaneous analysis of multiple sample carriers, and further improve the throughput of analysis.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a perspective view of a biochemical analysis device according to an embodiment of the present disclosure.
FIG. 2 is a block diagram of a biochemical analysis system according to an embodiment of the present disclosure.
FIG. 3 is a diagrammatic view showing a sequencing chip scheduled by a gene sequencing system according to an embodiment of the present disclosure.
FIG. 4 is a perspective view showing a chip driver outputting a loading device according to an embodiment of the present disclosure.
FIG. 5 is a perspective view of the chip driver of FIG. 4 from another angle.
FIG. 6 is a perspective view showing the chip driver retracting the loading device of FIG. 5.
FIGS. 7 and 8 are perspective views of the scheduling system and other related systems from different angles according to an embodiment of the present disclosure.
FIG. 9 is a block diagram of a control system according to an embodiment of the present disclosure.
FIG. 10 is a diagrammatic view showing the control system for controlling the biochemical analysis system according to an embodiment of the present disclosure.

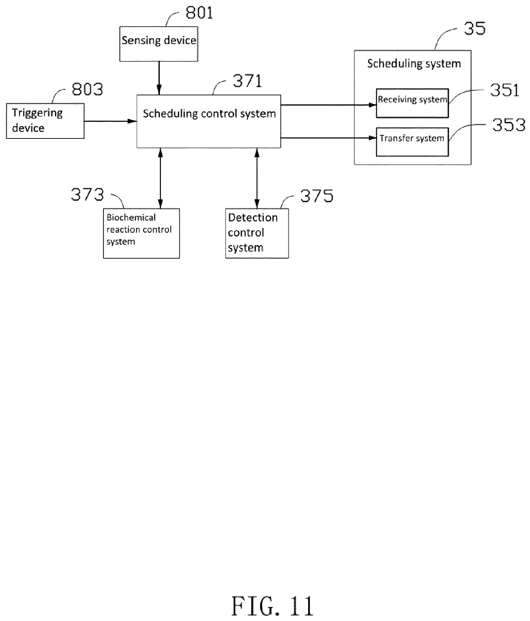

FIG. 11 is a diagrammatic view showing the scheduling control system for controlling the scheduling system according to an embodiment of the present disclosure.
FIG. 12 is a diagrammatic view showing the scheduling control system for controlling the scheduling system according to another embodiment of the present disclosure.
FIG. 13 is a flowchart of a scheduling method according to an embodiment of the present disclosure.
FIG. 14 is a flowchart of a scheduling method according to another embodiment of the present disclosure.

Implementations of the disclosure will now be described, by way of embodiments only, with reference to the drawings.

### Symbol description of main components

biochemical analysis device 1; shell 2
biochemical analysis system 3; sample inlet interface 201
biochemical reaction system 31; detection system 33
scheduling system 35; control system 37
gene sequencing system 3a; receiving system 351
transfer system 353; chip driver 351 a
mechanical manipulator 353a; biochemical reaction platform 311
site 311a, 331a; detection platform 331
transfer platform 301; cleaning chip platform 303
recycling bin 305; clamping claw 3531, 3532
loading device 3511; driving device 3513
sensing device 3515; sequencing chip 4
position sensor 3515a; identity identification device 3515b
confirmation sensor 3515c; buffer device 3517
elastic buffer 3517a; stepper motor 3513a
synchronous wheel 3513b; synchronous belt 3513c
guiding device 3519; guiding rail 3519a
guiding slot 3511a; mechanical arm 3533
transfer site 3011; software program 37a
processing device 37b; storage device 37c
I/O interface 37d; scheduling control system 371
biochemical reaction control system 373; detection control system 375
sensing device 801; triggering device 803
step S1001, S1002, S1101, and S1102.

### DETAILED DESCRIPTION

Implementations of the disclosure will now be described, by way of embodiments only, with reference to the drawings. The described embodiments are only some embodiments of the present disclosure, rather than all the embodiments. The disclosure is illustrative only, and changes may be made in the detail within the principles of the present disclosure. It will, therefore, be appreciated that the embodiments may be modified within the scope of the claims.

It should be noted that when a component is referred to as being "fixed to" or "mounted on" another component, the component can be directly on another component or a middle component may exist therebetween. When a component is considered to be "arranged on" another component, the component can be directly on another component or a middle component may exist therebetween. The term "and/or" as used herein means any combinations of one or more related listed items.

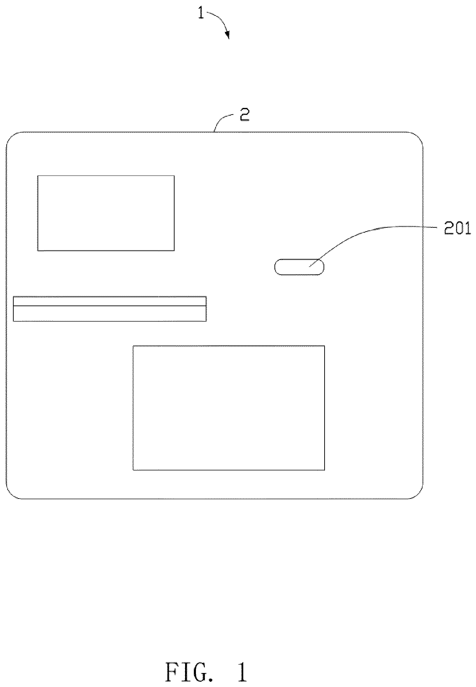

FIG. 1 is a perspective view of a biochemical analysis device of the present disclosure. The biochemical analysis device 1 comprises a shell 2 and a biochemical analysis system 3. The biochemical analysis system 3 is disposed in the shell 2, and can interact with external systems outside through the shell 2. In other embodiments, the shell 2 may not be included in the biochemical analysis device 1, that is, the biochemical analysis system 3 is not disposed in the shell.

In the embodiment, a plurality of input and output interfaces are arranged on the housing 2. The input and output interfaces include a sample inlet interface 201. The sample inlet interface 201 receives a device for carrying a biological sample (hereinafter, "sample carrier"), such as a sequencing chip. The sample carrier, when entering the biochemical analysis device 1, is analyzed by the biochemical analysis system 3 to obtain one or more biological characteristics of the sample.

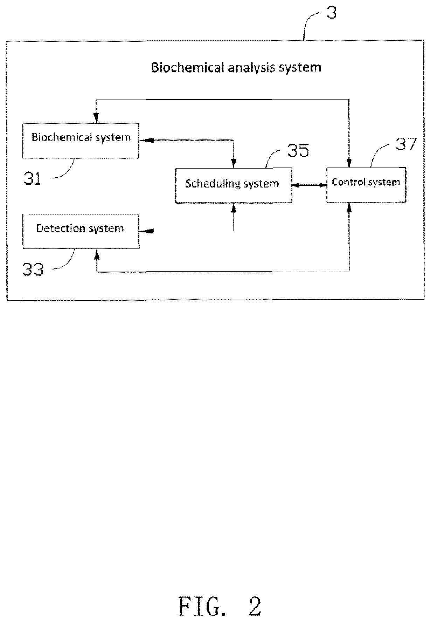

As shown in FIG. 2, the biochemical analysis system 3 includes a biochemical reaction system 31, a detection system 33, a scheduling system 35, and a control system 37. The scheduling system 35 is used to receive the sample carrier and schedule the sample carrier in different locations (sites). The sites at least include a site in the detection system 33 and a site in the biochemical reaction system 31. After the sample carrier is loaded on site in the biochemical reaction system 31, the biochemical reaction system 31 injects a reaction substance into the sample carrier to initiate a reaction with the sample carried by the sample carrier. After the sample carrier is loaded on site in the detection system 33, the detection system 33 performs detection of a signal from the reacted sample carried by the sample carrier, so as to obtain the biological characteristics of the sample. The control system 37 is used to control the biochemical reaction system 31, the detection system 33, and the scheduling system 35 in cooperation.

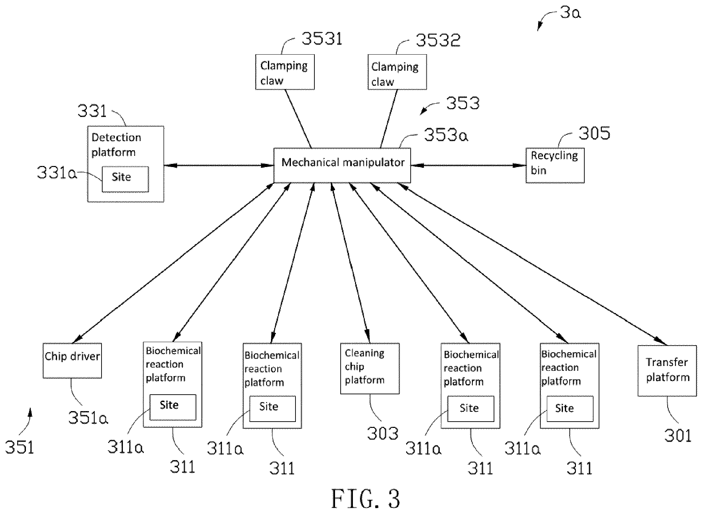

Referring to FIG. 3, in an embodiment, taking gene sequencing as an example, the biochemical analysis device 1 is a gene sequencer, the biochemical analysis system 3 is a gene sequencing system 3a, and the sample carrier is a sequencing chip carrying DNA or RNA samples. The scheduling system 35 includes a receiving system 351 and a transfer system 353. In the specific embodiment, the receiving system 351 may be a chip driver 351a, which transfers the sequencing chip placed thereon to a site available by the transfer system 353. In the specific embodiment, the transfer system 353 can be a mechanical manipulator 353a, which transfers the sequencing chip among different sites according to the sequencing process, so that the sequencing chip can complete the whole sequencing process.

In the embodiment, the biochemical reaction system 31 includes a plurality of biochemical reaction platforms 311. FIG. 3 shows four biochemical reaction platforms 311, and each biochemical reaction platform 311 is provided with a site 311a for loading the sequencing chip. The detection system 33 includes one or more detection platforms 331. FIG. 3 shows one detection platform 331, which is provided with a site 331a for loading the sequencing chip. Furthermore, in the embodiment, a transfer platform 301, a cleaning chip platform 303, and a recycling bin 305 are further provided. The turntable 301 is used to temporarily hold the sequencing chip to be transferred. The recycling bin 305 is used to hold the sequencing chip that has completed all sequencing processes or the sequencing chips discarded during the sequencing process. The cleaning chip platform 303 is used to hold a cleaning chip for cleaning the biochemical reaction platform 311. The cleaning chip is used to clean or assist other components to clean one or more specific components on the biochemical reaction platform 311. For example, cleaning chip cleans or assists other components to clean an liquid inlet and liquid outlet on the biochemical reaction platform 311.

**In** the embodiment, under the control of the control system 37, the mechanical manipulator 353a moves back and forth among the chip driver 351a, the four biochemical reaction platforms 311, the detection platform 331, the transfer platform 301, the recycling bin 305, and the cleaning chip platform 303, so as to complete the biochemical reaction on the biochemical reaction platform 311 and signal detection on the detection platform 331 according to preset program. Finally, the whole sequencing process is completed. Since the chip driver 351a can continuously receive multiple sequencing chips, when all biochemical reaction platforms 311 are occupied, other sequencing chips requiring biochemical reaction are temporarily placed on the transfer platform 301 by the mechanical manipulator 353a. When any biochemical reaction platform 311 is idle, the sequencing chips are then transferred from the transfer platform 301 to the idle biochemical reaction platform 311. When all detection platforms 331 are occupied, other sequencing chips requiring signal detection are temporarily placed on the transfer platform 301 by the mechanical manipulator 353a. When any detection platform 331 is idle, the sequencing chips are then transferred from the transfer platform 301 to the idle detection platform 331. When any biochemical reaction platform 311 completes the biochemical reaction of a preset number of sequencing chip(s), such as a single sequencing chip, the mechanical manipulator 353a transfers the cleaning chip placed on the cleaning chip platform 303 to the biochemical reaction platform 311, so that the biochemical reaction system 31 cleans the specific component on the biochemical reaction platform 311 under the control of the control system 37 to remove residual matter. After the cleaning, the mechanical manipulator 353a then transfers the cleaning chip to the cleaning chip platform 303. In another embodiment, the above cleaning procedure may also be carried out after all works on the biochemical reaction platform 311 are completed. After any sequencing chip completes all sequencing processes or is determined as a waste chip by the control system 37 during the sequencing process, the mechanical manipulator 353a transfers the sequencing chip to the recycling bin 305 for the recycling of such chip.

The mechanical manipulator 353a includes double clamping claws, namely, clamping claws 3531 and 3532. When transferring the sequencing chip to any biochemical reaction platform 311 or any detection platform 331, one of the clamping claws, such as the clamping claw 3531, clamps the sequencing chip to be transferred to the biochemical reaction platform 311 (hereinafter, "sequencing chip 'a'"). Before the mechanical manipulator 353a moves to the biochemical reaction platform 311 or the detection platform 331, the other clamping claw, such as the clamping claw 3532, removes the sequencing chip (hereinafter, "sequencing chip 'b'") from the biochemical reaction platform 311 or detection platform 331. The clamping claw 3531 then loads the sequencing chip "a" onto the biochemical reaction platform 311 or the detection platform 331. Thus, double clamping claws allow the mechanical manipulator 353a to simultaneously remove the previous sequencing chip and put in place the next sequencing chip during transferring the sequencing chips, thereby saving time for the mechanical manipulator 353a to move among different sites.

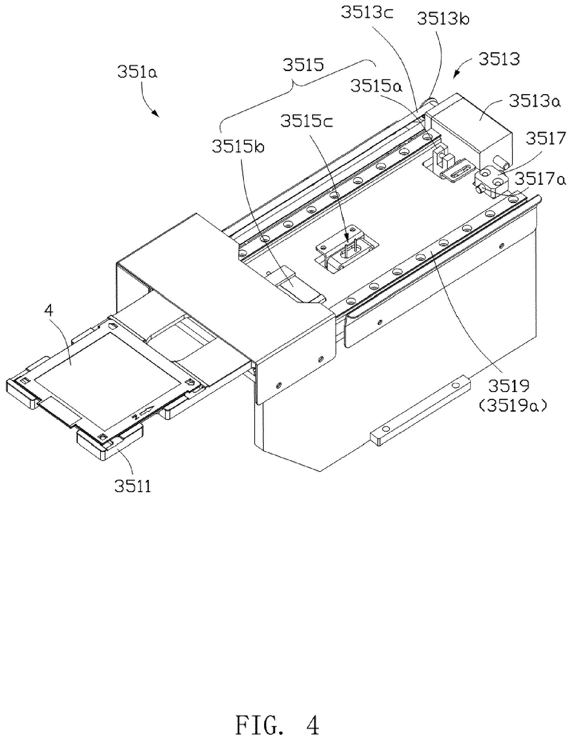

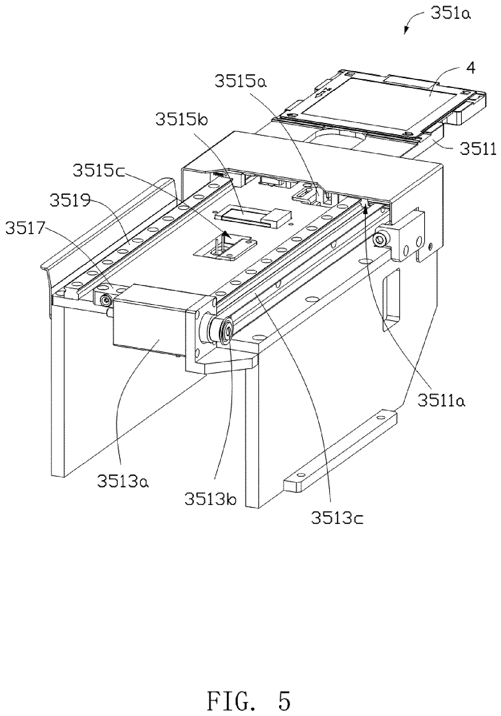

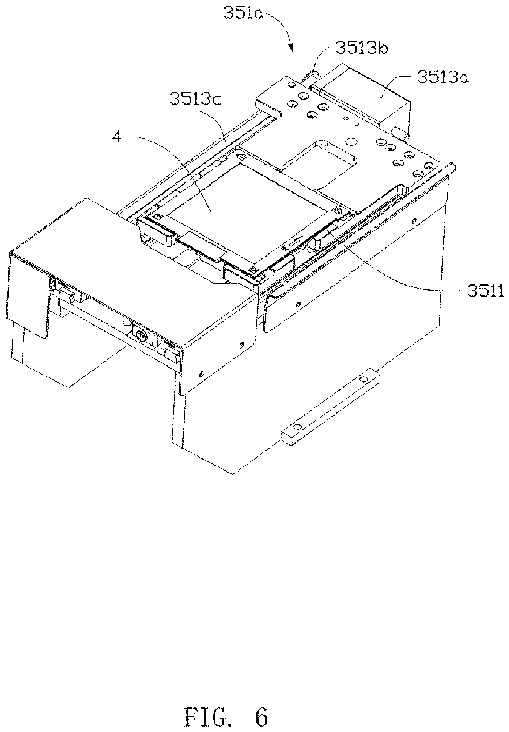

Referring to FIGS. 4-6, in one embodiment, the chip driver 351a includes a loading device 3511, a driving device 3513, and a sensing device 3515. In the embodiment, the loading device 3511 is a loading disk for carrying the sequencing chip 4. The driving device 3513 is under the control of the control system 37, and drives the loading device 3511 to move between two sites according to the control of the control system 37. The first site is a position for receiving the sequencing chip 4, and the second site is a position of the preset transfer system 353 for obtaining the sequencing chip 4. The sensing device 3515 includes a position sensor 3515a, which is used to sense a position of the loading device 3511 and send the sensed position signal to the control system 37. Thus, the control system 37 can start and stop the driving device 3513 and control the driving direction of the driving device 3513 according to the position signal and/or other signals of the loading device 3511. In the embodiment, the sensing device 3515 also includes an identity identification device 3515b for sensing an identity information of the sequencing chip 4. In the embodiment, the identity identification device 3515b is a radio frequency identification device. In other embodiments, the identity identification device 3515b may also be a code scanning identification device for identifying one-dimensional code, two-dimensional code, etc. After sensing the identity information of the sequencing chip 4, the identity identification device 3515b sends the identity information of the sequencing chip 4 to the control system 37, so that the control system 37 can control the whole process of the sequencing chip 4 in the gene sequencing system 3a based on the identity information of the sequencing chip 4, or based on the identity information and the position information of the sequencing chip 4. Thus, the sequencing chip 4 can undergo the whole predetermined sequencing process.

In the present embodiment, the position sensor 3515a includes a position sensor for sensing that the loading device 3511 has reached the first site and another position sensor for sensing that the loading device 3511 has reached the second site. When the loading device 3511 reaches the first site, the position sensor for sensing the loading device 3511 at the first site sends a position signal to the control system 37, to notify the control system 37 that the loading device 3511 has reached the first site. The control system 37 then stops driving the device 3513 to maintain the loading device 3511 at the first site. After the sequencing chip 4 is placed on the loading device 3511 at the first site, the control system 37 starts the driving device 3513 to move towards the second site according to an indication signal indicating that the sequencing chip 4 has been disposed in the loading device 3511. In the embodiment, the indication signal indicating that the sequencing chip has been disposed in the loading device 3511 is generated by an operator pressing a specific button (not shown). In other embodiments, the indication signal indicating that the sequencing chip 4 has been disposed in the loading device 3511 may also be generated by the sensing device 3515. The sensing device 3515 may further include a chip sensor (not shown) for sensing whether the sequencing chip 4 is disposed in the loading device 3511. When the loading device 3511 has reached the second site, the position sensor for sensing the loading device 3511 at the second site sends a position signal to the control system 37, to notify the control system 37 that the loading device 3511 has reached the second site. The control system 37 then halts the device 3513 to maintain the loading device 3511 at the second site. At the same time, according to the occupation of the mechanical manipulator 353a, the biochemical reaction platforms 311, and the transfer platform 301, the control system 37 controls the mechanical manipulator 353a to transfer the sequencing chip 4 from the second site to one of the biochemical reaction platforms 311 or to the transfer platform 301 at an appropriate time. After the sequencing chip 4 has been transferred, if the control system 37 receives a signal requiring placement of another sequencing chip 4, the control system 37 further starts the driving device 3513, which drives the loading device 3511 to move towards the first site. In the embodiment, the requiring signal for placing another sequencing chip 4 is generated by the operator pressing a specific button (not shown). The specific button can be a mechanical button or an icon displayed on a display screen. The identity identification device 3515b is arranged at any position on a route from the first site to the second site. In a first embodiment, the identity identification device 3515b is arranged at the first site. In a second embodiment, the identity identification device 3515b is arranged at the second site. In a third embodiment, the identity identification device 3515b is arranged between the first site and the second site. Furthermore, in another embodiment, the identity identification device 3515b is arranged below the route from the first site to the second site of the sequencing chip 4. In other embodiments, the identity identification device 3515b may also be arranged at a position adjacent to the route from the first site to the second site. The position setting of the identity identification device 3515b is not limited, only ensuring that the identity identification device can sense the identity information of the sequencing chip 4 when the chip driver 351a receives and moves a sequencing chip 4.

**In** the embodiment, the sensing device 3515 also includes a confirmation sensor 3515c for determining whether the sequencing chip 4 has been placed on the loading device 3511. The confirmation sensor 3515c is arranged at any position on the path from the first site to the second site. In another embodiment, the confirmation sensor 3515c is arranged below the route from the first site to the second site of the sequencing chip 4. The confirmation sensor 3515c is an infrared scanning device, which senses whether the sequencing chip 4 is present on the loading device 3511 by scanning a specific pattern or figure on the sequencing chip 4. The confirmation sensor 3515c may also be an infrared sensor for confirming whether the sequencing chip 4 is in place on the loading device 3511 by sensing a distance between the sequencing chip 4 and the infrared sensor. It can be understood that the position of the confirmation sensor 3515c is not limited, only ensuring that the confirmation sensor 3515c can sense whether the sequencing chip 4 is in place on the loading device 3511. The technical means used by the confirmation sensor 3515c is also not limited, any existing technical means to sense an existence of specific object can be applied hereto. In the embodiment, the chip driver 351a also includes a buffer device 3517, which is used to protect the loading device 3511 and prevent the loading device 3511 from colliding with other components, causing damage to the loading device 3511 or other devices. In the embodiment, the buffer device 3517 is arranged at an end of the second site away from the first site. The buffer device 3517 includes an elastic buffer 3517a facing the loading device 3511. In the embodiment, the elastic buffer 3517a is a spring. In other embodiments, the elastic buffer 3517a may also be a rubber element or other element or assembly having impact-absorbing properties.

In the embodiment, the driving device 3513 includes a stepper motor 3513a, a synchronous wheel 3513b driven by the stepper motor 3513a, and a synchronous belt 3513c driven by the synchronous wheel 3513b. The loading device 3511 is fixed to the synchronous belt 3513, and moves between the first site and the second site when driven by the synchronous belt 3513c. In other embodiments, the driving device 3513 may also adopt other transmission modes, such as sprocket transmission, gear transmission, etc. In the embodiment, the chip driver 351a also includes a guiding device 3519, which guides the loading device 3511 to move along a predetermined track between the first site and the second site. In the embodiment, the guiding device 3519 is a guiding rail 3519a connecting the first site and the second site. The loading device 3511 is provided with a guiding slot 3511a that matches the guiding rail 3519a. In the embodiment, the guiding slot 3511a is arranged below the loading device 3511, and the loading device 3511 is arranged above the guiding rail 3519a. In other embodiments, the guiding rail 3511a may also be arranged on a side of the loading device 3511. In other embodiments, the guiding device 3519 may also be a guiding slot connecting the first site and the second site, and the loading device 3511 is provided with a guiding block that matches the guiding slot.

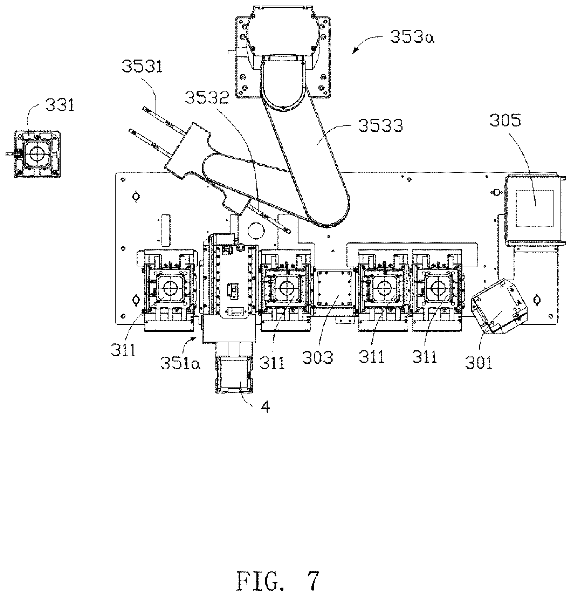

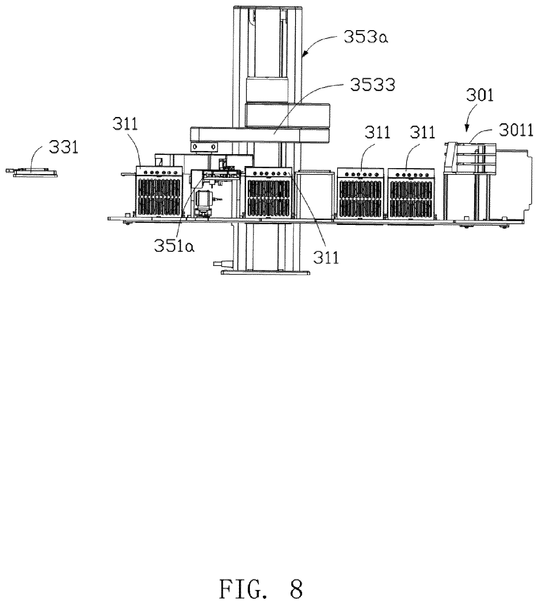

FIGS. 7 and 8 are diagrammatic views showing an embodiment of the scheduling system 35 and other related systems from different angles. In the embodiment, the biochemical reaction system 31 includes four biochemical reaction platforms 311. The four biochemical reaction platforms 311, the cleaning chip platform 303, the transfer platform 301, and the chip driver 351a are arranged in a row in front of the mechanical manipulator 353a. The detection platform 331 of the detection system 33 and the recycling bin 305 are arranged on a side of the mechanical manipulator 353a. The mechanical manipulator 353a has multiple degrees of freedom, which allows the mechanical arm 3533 of the mechanical manipulator 353a to move among the chip driver 351a, the four biochemical reaction platforms 311, the detection platform 331, the cleaning chip platform 303, the transfer platform 301, and the recycling bin 305. The clamping claws 3531 and 3532 arranged at the end of the mechanical arm 3533 can move the sequencing chip 4 at the above different positions. In one embodiment, , when the mechanical manipulator 353a moves to any one of the above positions to perform a relevant task (such as removing the previous sequencing chip 4 and loading the next sequencing chip 4), the mechanical arm 3533 of the mechanical manipulator 353a has a fixed position and posture relative to the above position. The position and posture of the mechanical manipulator 353a at the above position is preset as data in the control system 37. Thus, when the mechanical manipulator 353a is assigned to the position to perform relevant tasks, the control system 37 can accurately position the mechanical arm 3533 of the mechanical manipulator 353a at the above position.

In the embodiment, the transfer platform 301 includes a number of transfer sites 3011, and each transfer site 3011 corresponds to one biochemical reaction platform 311. In the embodiment, the above relationship can be interpreted as each transfer site 3011 being used to temporarily store the sequencing chip 4 to be loaded on the corresponding biochemical reaction platform 311, and/or, each transfer site 3011 being used to temporarily store the sequencing chip 4 unloaded from the biochemical reaction platform 311 and waiting to be loaded to the detection platform 331. In other embodiments, no relationship exists between the transfer sites 3011 and the biochemical reaction platforms 311. Each transfer site 3011 is used to temporarily store one sequencing chip 4 each time. The control system 37 controls each sequencing chip 4 to complete the predetermined sequencing process by recording the specific position of each sequencing chip 4 at each node, for example, recording the transfer site 3011 at which the sequencing chip 4 is disposed. Alternatively, another identity identification device is set. After each sequencing chip 4 is removed from a transfer site 3011, the identity identification device recognizes the identity information of the sequencing chip 4 and sends it to the control system 37. The control system 37 controls the sequencing chip 4 to continue to complete the predetermined sequencing processes according to the identity information of the sequencing chip 4. Furthermore, in one embodiment, each transfer site 3011 may also include a sensing device for sensing the existence or absence of the sequencing chip 4. When the control system 37 does not record the position of the sequencing chip 4 on the transfer platform 301, the sensing device and the identification device cooperatively assist the control system 37 to control the whole sequencing process of the sequencing chip 4.

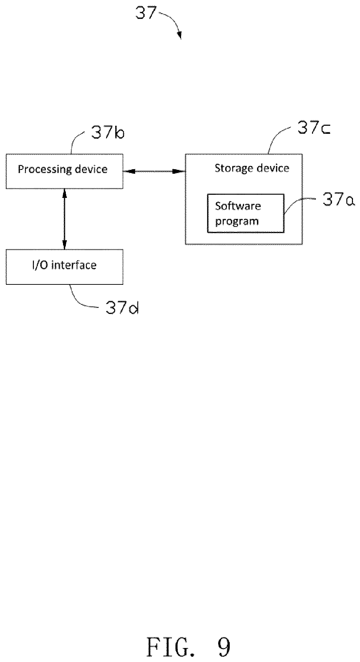

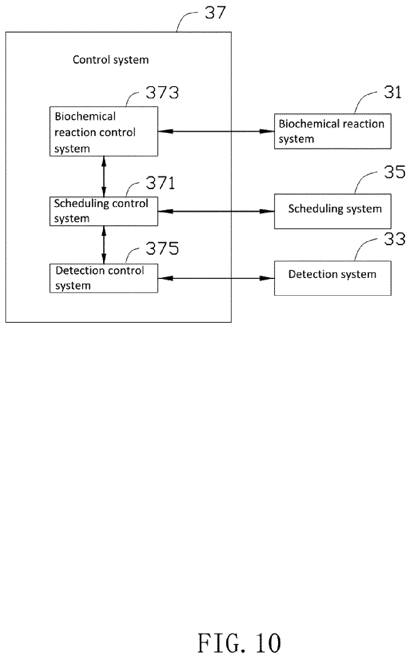

FIG. 9 is a block diagram of the control system 37 according to an embodiment of the present disclosure. The control system 37 includes a software program 37a and a hardware device for executing the software program to realize the functions of the control system 37. The hardware device includes a processing device 37b and a storage device 37c. The storage device 37c stores the software program and also the intermediate data and results data during the execution of the software program. The storage device 37c may include an external storage medium or an internal storage medium. In addition, the storage device 37c may include high-speed random access memory or storage medium, as well as nonvolatile memory or storage medium, such as hard disk, memory, plug-in hard disk, smart media card (SMC), secure digital (SD) card, flash card, at least one disk storage device, flash device, or other volatile solid-state storage devices. The processing device 37b executes the software program 37a stored in the storage device 37c to realize the functions of the control system 37. The hardware device also includes various I/O interfaces 37d. The control system 37 connects to other systems through the I/O interface 37d, so as to exercise control of such systems. The control system 37 may be a single chip microcomputer, PC, etc. embedded or loaded with the software program 37a. FIG. 10 is a diagrammatic view showing the control system 37 controlling the whole biochemical analysis system 3 according to an embodiment of the present disclosure. In the embodiment, the control system 37 includes a scheduling control system 371, a biochemical reaction control system 373, and a detection control system 375. The scheduling control system 371 controls the operations of the scheduling system 35. The biochemical reaction control system 373 controls the operations of the biochemical reaction system 31. The detection control system 375 controls the operations of the detection system 33. The scheduling control system 371, the biochemical reaction control system 373, and the detection control system 375 communicate with each other to coordinate the operations of the scheduling system 35, the biochemical reaction system 31, and the detection system 33. Controlling the biochemical reaction system 31 and the detection system 33 is not relevant to the present disclosure, and is omitted. The embodiment only describes the control of the scheduling system 35 by the scheduling control system 371.

FIG. II is a diagrammatic view showing the control system 371 controlling the scheduling system 35 according to an embodiment of the present disclosure. The scheduling control system 371 communicates with the sensing device 801, the trigger device 803, the biochemical reaction control system 373, the detection control system 375, and the scheduling system 35. The scheduling control system 371 executes the preset software program, and controls the scheduling system 35 to schedule the sample carrier among different sites according to various signals from the sensing device 801, the trigger device 803, the biochemical reaction control system 373, and the detection control system 375. The scheduling system 35 may include switches or triggers, which control the receiving system 351 and the transfer system 353 as a whole and which control internal components of the receiving system 351 and the transfer system 353. Through the switches or triggers that control the receiving system 351 and the transfer system 353 as a whole and/or internal components of the receiving system 351 and the transfer system 353, the scheduling control system 371 controls the receiving system 351 and the transfer system 353 as a whole and/or internal components of the receiving system 351 and the transfer system 353 to move to different positions. The sensing device 801 may include the above sensing device 3515. The trigger device 803 may be a device such as a button or an icon, which is set for the operator to operate and generate a corresponding signal to be transmitted to the scheduling control system 371.

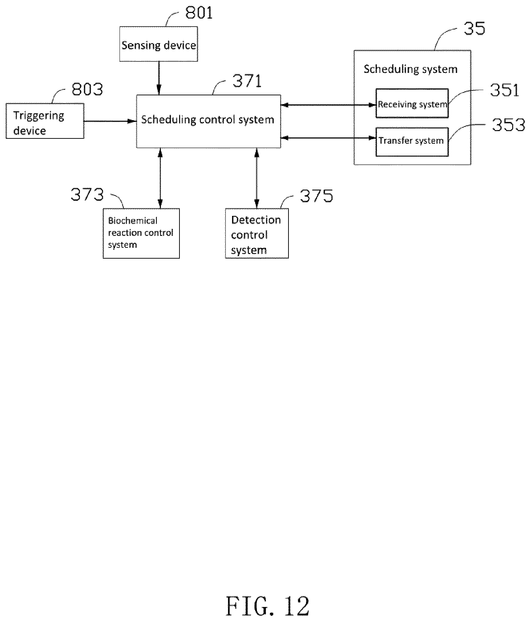

Referring to FIG. 12, in another embodiment, when the scheduling system 35 is controlled by the scheduling control system 371, the scheduling system 35 also provides feedback to the scheduling control system 371. The feedback can be in relation to all control actions or a portion of the control actions. The feedback can be in place feedbacks, deviation feedbacks, etc.

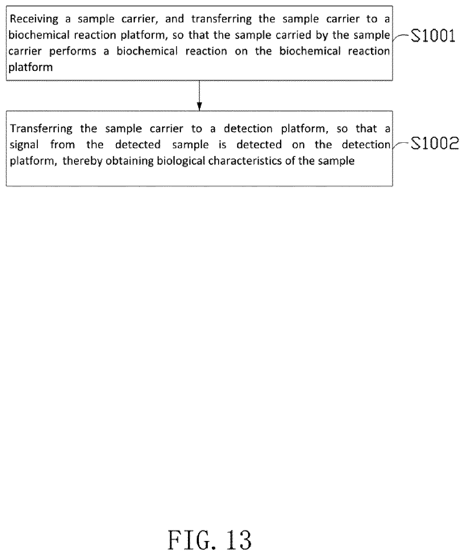

FIG. 13 is a flowchart of a scheduling method according to an embodiment of the present disclosure. The scheduling method can be applied to the above biochemical analysis system 3, which is executed by the scheduling control system 371 to control the scheduling system 35 to schedule the sample carrier in the biochemical analysis system 3. When applied to the above biochemical analysis system 3, a portion of steps of the scheduling method can be performed by the scheduling control system 371, while the remaining portion of the steps can be performed by the scheduling system 35. In some cases, the whole scheduling method is performed by the scheduling system 35.

In other embodiments, the order of some steps of the scheduling method may be changed, and some steps may even be omitted. The scheduling method includes the following steps.

Step S1001, receiving a sample carrier, and transferring the sample carrier to a biochemical reaction platform, so that the sample carried by the sample carrier performs a biochemical reaction on the biochemical reaction platform.

Step S1002, transferring the sample carrier to a detection platform, so that a signal from the reacted sample can be detected on the detection platform, thereby obtaining the biological characteristics of the sample.

In one embodiment, the step S1001 further includes receiving an indication signal indicating that the sample carrier has been disposed in the scheduling system, and transferring the sample carrier to the biochemical reaction platform after receiving the indication signal.

In one embodiment, the step S1001 further includes after receiving the indication signal, starting a receiving system of the scheduling system to transfer the sample carrier to a position available by a transfer system of the scheduling system, and controlling the transfer system to transfer the sample carrier to the biochemical reaction platform.

In one embodiment, the step S1001 further includes receiving an indication signal indicating that the sample carrier is required to be disposed in the scheduling system, and starting the receiving system of the scheduling system to receive the sample carrier after receiving the indication signal.

In one embodiment, the step S1001 further includes after receiving the indication signal indicating that the sample carrier is required to be disposed in the scheduling system, starting the receiving system, which outputs a loading device for receiving the sample carrier.

In one embodiment, before transferring the sample carrier to the biochemical reaction platform, the step S1001 further includes determining whether the biochemical reaction platform is occupied, if the biochemical reaction platform is occupied, transferring the sample carrier to the transfer platform for temporarily storing the sample carrier. Continuing to determine whether the biochemical reaction platform is occupied, if the biochemical reaction platform is unoccupied, directly transferring the sample carrier to the biochemical reaction platform. The biochemical reaction platform being occupied means the biochemical reaction of the sample in another sample carrier being performed on the biochemical reaction platform, or the biochemical reaction platform being cleaned, or the biochemical reaction platform is suspended (e.g., in case of failure), and sample carrier cannot be immediately loaded therein to perform the biochemical reaction in such situations. The biochemical reaction platform being unoccupied or being idle means the biochemical reaction of the sample in another sample carrier has been completed on the biochemical reaction platform, or the biochemical reaction platform has been cleaning, or the suspension has been canceled, etc., and sample carrier can be immediately loaded therein to perform the biochemical reaction in such situations. In some embodiments, since the mechanical manipulator of the transfer device includes double clamping claws, when one of the clamping claws holds the sample carrier, another one of the clamping claws removes another sample carrier that has completed the biochemical reaction from the biochemical reaction platform, and then the sample carrier can be loaded onto the biochemical reaction platform.

In one embodiment, before transferring the sample carrier to the biochemical reaction platform, the step S1001 further includes determining whether all biochemical reaction platforms are occupied, if all biochemical reaction platforms are occupied, transferring the sample carrier to the transfer platform for waiting. Continuing to determine whether all biochemical reaction platforms are occupied, if at least one biochemical reaction platform is unoccupied, transferring the sample carrier to one of the at least one unoccupied biochemical reaction platform. Specifically, if one biochemical reaction platform is unoccupied, transferring the sample carrier to the unoccupied biochemical reaction platform. If a number of biochemical reaction platforms are unoccupied, transfer the sample carrier to one of the unoccupied biochemical reaction platforms according to a preset rule. In one embodiment, all biochemical reaction platforms are numbered sequentially, and the preset rule is that when a number of biochemical reaction platforms are unoccupied, the sample carrier is transferred to one of the unoccupied biochemical reaction platforms numbered first (or last).

**In** one embodiment, whether the biochemical reaction platform is occupied is determined according to a signal from a biochemical reaction control system for controlling a biochemical reaction platform. If the biochemical reaction platform is unoccupied, a newly received sample carrier or the sample carrier temporarily stored at the transfer station waiting for biochemical reaction is transferred to the biochemical reaction platform.

In one embodiment, the step S1002 further includes determining whether the sample in the sample carrier has completed the biochemical reaction. If the sample has completed the biochemical reaction, transferring the sample carrier to the detection platform.

In one embodiment, whether the sample in the sample carrier completes the biochemical reaction is determined according to the signal from the biochemical reaction control system for controlling the biochemical reaction platform having the sample carrier.

In some embodiments, after receiving the sample carrier and before transferring the sample carrier to the biochemical reaction platform, step S1001 also includes identifying an identity information of the sample carrier.

In one embodiment, the step S1002 further includes determining whether the detection platform is occupied. If the detection platform is unoccupied, transferring the sample carrier to the detection platform. If the detection platform is occupied, transferring the sample carrier to a transfer platform for temporarily storing the sample carrier. Determine whether the detection platform is occupied. The detection platform being occupied means the signal detection of the sample in another sample carrier being performed on the detection platform, or the detection platform being suspended (e.g., in case of failure), and sample carrier cannot be immediately loaded therein to perform the signal detection in such situations. The detection platform being unoccupied or being idle means the signal detection of the sample in another sample carrier has been completed on the detection platform, or the suspension has been canceled, etc., and sample carrier can be immediately loaded therein. In some embodiments, since the mechanical manipulator of the transfer device includes double clamping claws, when one of the clamping claws holds the sample carrier, another one of the clamping claws removes another sample carrier that has completed the signal detection from the detection platform, and then the sample carrier can be loaded onto the detection platform.

In one embodiment, before transferring the sample carrier to the detection platform, the step S1002 further includes determining whether all detection platforms are occupied. If all detection platforms are occupied, transferring the sample carrier to the transfer platform for waiting. Continuing to determine whether all detection platforms are occupied. If at least one detection platform is unoccupied, transferring the sample carrier to one of the at least one unoccupied detection platform. Specifically, if one detection platform is unoccupied, the sample carrier is transferred to the unoccupied detection platform. If a number of detection platforms are unoccupied, the sample carrier is transferred to one of the unoccupied detection platforms according to a preset rule. In one embodiment, all detection platforms are numbered sequentially, and the preset rule is that when a number of detection platforms are unoccupied, the sample carrier is transferred to one of the unoccupied detection platforms numbered first (or last).

In one embodiment, whether the detection platform is occupied is determined according to the signal from the detection control system for controlling the detection platform. If the detection platform is unoccupied, a newly received sample carrier or the sample carrier temporarily stored in the transfer platform is transferred to the detection platform.

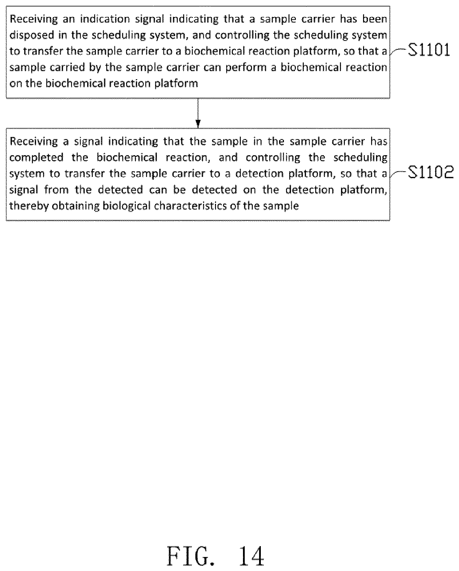

FIG. 14 is a flowchart of a scheduling method according to another embodiment of the present disclosure. The scheduling method can be applied to the above biochemical analysis system 3, and executed by the scheduling control system 371 to control the scheduling system 35 to schedule the sample carrier in the biochemical analysis system 3. When applied to the above biochemical analysis system 3, the whole scheduling method can be executed by the scheduling control system 35.

In other embodiments, the order of some steps in the method may be changed, and some steps may even be omitted. The scheduling method includes the following steps.

Step S1101, receiving an indication signal indicating that a sample carrier has been disposed in the scheduling system, and controlling the scheduling system to transfer the sample carrier to a biochemical reaction platform, so that a sample carried by the sample carrier can perform a biochemical reaction on the biochemical reaction platform.

Step S1102, receiving a signal indicating that the sample in the sample carrier has completed the biochemical reaction, and controlling the scheduling system to transfer the sample carrier to a detection platform, so that a signal from the reacted sample can be detected on the detection platform, thereby obtaining the biological characteristics of the sample.

In one embodiment, before step S1101, the method also includes receiving an indication signal indicating that the sample carrier is required to be disposed in the scheduling system, and starting the receiving system of the scheduling system to receive the sample carrier.

In one embodiment, before step S1101, the method also includes after receiving the indication signal indicating that the sample carrier is required to be disposed in the scheduling system, starting the receiving system, which outputs a loading device for receiving the sample carrier.

In one embodiment, before transferring the sample carrier to the biochemical reaction platform, the step S1101 further includes determining whether the biochemical reaction platform is occupied. If the biochemical reaction platform is occupied, controlling the transfer system of the scheduling system to transfer the sample carrier to the transfer station for temporarily storing. Continue to determine whether the biochemical reaction platform is occupied. If the biochemical reaction platform is unoccupied, controlling the transfer system to transfer the sample carrier to the biochemical reaction platform.

In one embodiment, before transferring the sample carrier to the biochemical reaction platform, the step S1101 further includes determining whether all biochemical reaction platforms are occupied. If all biochemical reaction platforms are occupied, transferring the sample carrier to the transfer platform for waiting. Continuing to determine whether all biochemical reaction platforms are occupied. If at least one biochemical reaction platform is unoccupied, transferring the sample carrier to one of the at least one unoccupied biochemical reaction platform. Specifically, if one biochemical reaction platform is unoccupied, transferring the sample carrier to the unoccupied biochemical reaction platform. If a number of biochemical reaction platforms are unoccupied, transferring the sample carrier to one of the unoccupied biochemical reaction platforms according to a preset rule. In one embodiment, all biochemical reaction platforms are numbered sequentially, and the preset rule is that when a number of biochemical reaction platforms are unoccupied, the sample carrier is transferred to one of the unoccupied biochemical reaction platforms numbered first (or last).

In one embodiment, whether the biochemical reaction platform is occupied is determined according to a signal from the biochemical reaction control system for controlling the biochemical reaction platform. If the biochemical reaction platform is unoccupied, transferring a newly received sample carrier or the sample carrier temporarily stored in the transfer platform to the biochemical reaction platform.

In one embodiment, whether the sample in the sample carrier completes the biochemical reaction is determined according to a signal from the biochemical reaction control system for controlling the biochemical reaction platform having the sample carrier.

In some embodiments, before transferring the sample carrier to the biochemical reaction platform, step S1101 also includes identifying the identity information of the sample carrier.

In one embodiment, the step S1102 further includes determining whether the detection platform is occupied. If the detection platform is unoccupied, transferring the sample carrier to the detection platform. If the detection platform is occupied, transferring the sample carrier to the transfer station for temporarily storing the sample carrier. Continue to determine whether the detection platform is occupied.

In one embodiment, before transferring the sample carrier to the detection platform, the step S1102 further includes determining whether all detection platforms are occupied. If all detection platforms are occupied, transferring the sample carrier to the transfer platform for waiting. Continuing to determine whether all detection platforms are occupied. If at least one detection platform is unoccupied, transferring the sample carrier to one of the at least one unoccupied detection platform. Specifically, if one of the detection platforms is unoccupied, transferring the sample carrier to the unoccupied detection platform. If a number of detection platforms are unoccupied, transferring the sample carrier to one of the unoccupied detection platforms according to a preset rule. In one embodiment, all detection platforms are numbered sequentially, and the preset rule is that when a number of detection platforms are unoccupied, the sample carrier is transferred to one of the unoccupied detection platforms numbered first (or last).

In one embodiment, whether the detection platform is occupied is determined according to a signal from the biochemical reaction control system for controlling the detection platform. If the detection platform is unoccupied, transferring a newly received sample carrier or the sample carrier temporarily stored in the transfer platform to the detection platform.

In one embodiment, after step S 1102, the method also includes determining whether the sample in the sample carrier has completed all the detection processes. If all the detection processes are completed, transferring the sample carrier to the recycling bin for recovery. If all the detection processes are not completed, transferring the sample carrier to the biochemical reaction platform for performing a next cycle of biochemical reaction or for waiting for the next cycle of biochemical reaction.

In one embodiment, after step S1102, the method also includes transferring the cleaning chip to the biochemical reaction platform to clean the biochemical reaction platform.

**In** sum, by automatically receiving and scheduling the sample carrier through the scheduling system and method, and the biochemical analysis system and device applying the scheduling system and method provided by the embodiments of the present disclosure, automatic loading of the sample carrier is realized, and the automation degree of the sample carrier scheduling is improved. The simultaneous analysis of multiple sample carriers is also realized, which improves the analysis throughput.

Even though information and advantages of the present embodiments have been set forth in the foregoing description, together with details of the structures and functions of the present embodiments, the disclosure is illustrative only. Changes may be made in detail, especially in matters of shape, size, and arrangement of parts within the principles of the present exemplary embodiments, to the full extent indicated by the plain meaning of the terms in which the appended claims are expressed.

## Claims

1. A scheduling system, **characterized in that**, comprising:
a receiving system; and
a transfer system, wherein the receiving system is configured to receive a sample carrier, the transfer system is configured to transfer the sample carrier between a biochemical reaction platform and a detection platform, so that a sample in the sample carrier performs a biochemical reaction on the biochemical reaction platform, and a signal from the reacted sample is detected on the detection platform.

2. The scheduling system of claim 1, **characterized in that**, the transfer system is further configured to transfer the sample carrier between the biochemical reaction platform and a transfer platform, to temporarily store the sample carrier on the transfer platform before transferring the sample carrier to the biochemical reaction platform and/or before transferring the sample carrier to the detection platform; and/or
the transfer system is further configured to transfer the sample carrier between the detection platform and a transfer platform, to temporarily store the sample carrier on the transfer platform before transferring the sample carrier to the detection platform and/or before transferring the sample carrier to the biochemical reaction platform.

3. The scheduling system of claim 1, **characterized in that**, the transfer system is further configured to transfer the sample carrier that completes all detection processes to a recycling bin.

4. The scheduling system of claim 1, **characterized in that**, the receiving system comprises a loading device and a sensing device; the loading device is configured to load the sample carrier; the sensing device is configured to confirm whether the sample carrier is loaded on the loading device.

5. The scheduling system of claim 4, **characterized in that**, further comprising a driving device, wherein the driving device is configured to drive the loading device to move, thereby transferring the sample carrier to a preset position available by the transfer system.

6. The scheduling system of claim 4, **characterized in that**, the sensing device is further configured to sense an identity information of the sample on the loading device and/or a position of the loading device.

7. The scheduling system of claim 1, **characterized in that**, the transfer system comprises a mechanical arm and at least one clamping claw; the at least one clamping claw is configured to clamp the sample carrier; the mechanical arm is configured to drive the at least one clamping claw to move between different positions.

8. The scheduling system of claim 7, **characterized in that**, the at least one clamping claw comprises two clamping claws configured to simultaneously clamp two sample carriers; one of the two clamping claws loads one of the two sample carriers to the biochemical reaction platform; the other of the two clamping claws removes the other of the two sample carriers from the biochemical reaction platform.

9. The scheduling system of claim 7, **characterized in that**, the biochemical reaction platform comprises a plurality of biochemical reaction platforms; the scheduling system is configured to receive a plurality of sample carriers, and successively transfers the plurality of sample carriers to the plurality of biochemical reaction platforms for performing the biochemical reaction.

10. A scheduling control system adapted to control the scheduling system of any one of claims 1 to 9, wherein the scheduling control system is connected to a sensing device, a triggering device, a biochemical reaction control system for controlling the biochemical reaction, a detection control system for controlling the detection, and the scheduling system, through receiving signals from the sensing device, the trigger device, the biochemical reaction control system, and the detection control system, the scheduling control system is configured to control the scheduling system to schedule the sample carrier between different sites.

11. The scheduling control system of claim 10, wherein the scheduling control system is configured to receive an indication signal from the sensing device or the trigger device indicating that the sample carrier has been disposed in the scheduling system, and control the scheduling system to transfer the sample carrier to the biochemical reaction platform, so that the sample carried by the sample carrier can perform the biochemical reaction on the biochemical reaction platform; and/or
the scheduling control system is configured to receive a signal from the biochemical reaction control system indicating that the sample in the sample carrier has completed the biochemical reaction, and control the scheduling system to transfer the sample carrier to the detection platform.

12. A scheduling method, **characterized in that**, comprising:
a. receiving a sample carrier and transferring the sample carrier to a biochemical reaction platform, so that a sample carried by the sample carrier performs a biochemical reaction on the biochemical reaction platform; and
b. transferring the sample carrier to a detection platform, so that a signal from the reacted sample is detected on the detection platform, thereby obtaining biological characteristics of the sample.

13. The scheduling method of claim 12, **characterized in that**, step a further comprises:
receiving an indication signal indicating that the sample carrier has been disposed in a scheduling system, and transferring the sample carrier to the biochemical reaction platform after receiving the indication signal.

14. The scheduling method of claim 13, **characterized in that**, step a further comprises:
after receiving the indication signal, starting a receiving system of the scheduling system, transmitting the sample carrier to a position available by a transfer system of the scheduling system, and controlling the transfer system to transfer the sample carrier to the biochemical reaction platform,

15. The scheduling method of claim 13, **characterized in that**, step a further comprises:
receiving an indication signal indicating that the sample carrier is required to be disposed in the scheduling system, and starting a receiving system of the scheduling system to receive the sample carrier after receiving the indication signal.

16. The scheduling method of claim 15, **characterized in that**, step a further comprises:
after receiving the indication signal indicating that the sample carrier is required to be disposed in the scheduling system, starting the receiving system, which outputs a loading device for receiving the sample carrier.

17. The scheduling method of claim 12, **characterized in that**, before transferring the sample carrier to the biochemical reaction platform, step a further comprises:
determining whether the biochemical reaction platform is occupied: when the biochemical reaction platform is occupied, transferring the sample carrier to the transfer platform for temporarily storing the sample carrier; continuing to determine whether the biochemical reaction platform is occupied; when the biochemical reaction platform is unoccupied, directly transferring the sample carrier to the biochemical reaction platform; or;
determining whether all the biochemical reaction platforms are occupied; when all the biochemical reaction platforms are occupied, transferring the sample carrier to the transfer platform for temporarily storing the sample carrier; continue to determine whether all the biochemical reaction platforms are occupied.; when at least one of the biochemical reaction platforms is unoccupied, transferring the sample carrier to one of the at least one unoccupied biochemical reaction platform.

18. The scheduling method of claim 17, **characterized in that**, whether the biochemical reaction platform is occupied is determined according to a signal from a biochemical reaction control system for controlling the biochemical reaction platform; when the biochemical reaction platform is unoccupied, transferring a newly received sample carrier or the sample carrier temporarily stored on the transfer platform waiting for the biochemical reaction to the biochemical reaction platform.

19. The scheduling method of claim 12, **characterized in that**, after receiving the sample carrier and before transferring the sample carrier to the biochemical reaction platform, step a also comprises:
identifying the identity information of the sample carrier.

20. The scheduling method of claim 12, **characterized in that**, step b comprises:
determining whether the sample in the sample carrier completes the biochemical reaction; when the sample completes the biochemical reaction, transferring the sample carrier to the detection platform.

21. The scheduling method of claim 20, **characterized in that**, whether the sample in the sample carrier completes the biochemical reaction is determined according to a signal from the biochemical reaction control system for controlling the biochemical reaction platform having the sample carrier.

22. The scheduling method of claim 12, **characterized in that**, step b further comprises:
determining whether the detection platform is unoccupied; when the detection platform is unoccupied, transferring the sample carrier to the detection platform; when the detection platform is unoccupied, transferring the sample carrier to a transfer platform for temporarily storing the sample carrier; continuing to determine whether the detection platform is occupied; or
determining whether all the detection platforms are occupied; when all the detection platforms are occupied, transferring the sample carrier to the transfer platform for temporarily storing the sample carrier; continuing to determine whether all the detection platforms are occupied; when at least one of the detection platforms is unoccupied, transferring the sample carrier to one of the at least one unoccupied detection platform.

23. The scheduling method of claim 22, **characterized in that**, whether the detection platform is occupied is determined according to a signal from a detection control system for controlling the detection platform.

24. A scheduling method, **characterized in that**, comprising:
a. receiving an indication signal indicating that the sample carrier has been disposed in a scheduling system, controlling the scheduling system to transfer the sample carrier to a biochemical reaction platform, so that a sample in the sample carrier performs a biochemical reaction on the biochemical reaction platform; and
b. receiving a signal that the sample in the sample carrier has completed the biochemical reaction, controlling the scheduling system to transfer the sample carrier to a detection platform, so that a signal from the reacted sample is detected on the detection platform, thereby obtaining biological characteristics of the sample.

25. The scheduling method of claim 24, **characterized in that**, before step a, the scheduling method further comprises:
receiving an indication signal indicating that the sample carrier is required to be disposed in the scheduling system, and starting a receiving system of the scheduling system to receive the sample carrier.

26. The scheduling method of claim 25, wherein before step a, the scheduling method further comprises:
after receiving the indication signal indicating that the sample carrier is required to disposed in the scheduling system, starting the receiving system, which outputs a loading device for receiving the sample carrier.

27. The scheduling method of claim 24, **characterized in that**, before transferring the sample carrier to the biochemical reaction platform, step a further comprises:
determining whether the biochemical reaction platform is occupied; when the biochemical reaction platform is occupied, transferring the sample carrier to the transfer platform for temporarily storing the sample carrier;
continuing to determine whether the biochemical reaction platform is occupied; when the biochemical reaction platform is unoccupied, directly transferring the sample carrier to the biochemical reaction platform; or;
determining whether all the biochemical reaction platforms are occupied; when all the biochemical reaction platforms are occupied, transferring the sample carrier to the transfer platform for temporarily storing the sample carrier; continue to determine whether all the biochemical reaction platforms are occupied.; when at least one of the biochemical reaction platforms is unoccupied, transferring the sample carrier to one of the at least one unoccupied biochemical reaction platform.

28. The scheduling method of claim 24, **characterized in that**, before transferring the sample carrier to the detection platform, step a further comprises:
determining whether the detection platform is unoccupied; when the detection platform is unoccupied, transferring the sample carrier to the detection platform; when the detection platform is unoccupied, transferring the sample carrier to a transfer platform for temporarily storing the sample carrier; continuing to determine whether the detection platform is occupied; or
determining whether all the detection platforms are occupied; when all the detection platforms are occupied,
transferring the sample carrier to the transfer platform for temporarily storing the sample carrier; continuing to determine whether all the detection platforms are occupied; when at least one of the detection platforms is unoccupied, transferring the sample carrier to one of the at least one unoccupied detection platform.

29. The scheduling method of claim 24, **characterized in that**, step b further comprises:
determining whether the sample in the sample carrier has completed all detection processes; when all detection processes have been completed, transferring the sample carrier to a recycling bin for recovery; when all detection processes have not been completed, transferring the sample carrier to the biochemical reaction platform to perform a next cycle of biochemical reaction or to the transfer platform for temporarily storing the sample carrier to wait for the next cycle of biochemical reaction.

30. The scheduling method of claim 24, **characterized in that**, after step b, the scheduling method further comprises:
transferring a cleaning chip to the biochemical reaction platform to clean the biochemical reaction platform.

31. A biochemical analysis system, comprising a scheduling system of any one of claims 1 to 9, or a scheduling control system of claim 10 or 11, or a scheduling method of claims 12 to 30 for sample carrier scheduling.

32. A biochemical analysis device, **characterized in that**, comprising a scheduling system of any one of claims 1 to 9, or a scheduling control system of claim 10 or 11, or a biochemical analysis system of claim 31, or applying a scheduling method of any one of claims 12 to 30 for sample carrier scheduling.

33. A computer-readable storage medium on which a computer program is stored, **characterized in that**, when the computer program is executed by a processing device to perform a scheduling method of any one of claims 24 to 30.
